(19) Europäisches Patentamt
European Patent Office
Office européen des brevets

(11) **EP 3 848 697 B1**

## (12) EUROPEAN PATENT SPECIFICATION

(45) Date of publication and mention
of the grant of the patent:
**21.12.2022   Bulletin 2022/51**

(51) International Patent Classification (IPC):
***G01N 17/02*** *(2006.01)*       ***C23F 13/06*** *(2006.01)*

(52) Cooperative Patent Classification (CPC):
**G01N 17/02; C23F 13/06;** C23F 2213/32

(21) Application number: **21150205.9**

(22) Date of filing: **05.01.2021**

(54) **REFERENCE ELECTRODE FOR CATHODIC PROTECTION MEASUREMENTS**

REFERENZELEKTRODE FÜR KATHODENSCHUTZMESSUNGEN

ÉLECTRODE DE RÉFÉRENCE POUR DES MESURES DE PROTECTION CATHODIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2020   IT 202000000301**

(43) Date of publication of application:
**14.07.2021   Bulletin 2021/28**

(73) Proprietors:
• **Automa S.r.l.**
**60131 Ancona (AN) (IT)**
• **F.M. Engineering S.r.l.**
**60131 Ancona (IT)**

(72) Inventors:
• **MARINELLI, UGO**
**60131 ANCONA (IT)**
• **MAGNIFICO, IVANO**
**60015 FALCONARA MARITTIMA (AN) (IT)**

(74) Representative: **Cutropia, Gianluigi**
**Ing. Claudio Baldi s.r.l.**
**Viale Cavallotti, 13**
**60035 Jesi (AN) (IT)**

(56) References cited:
**EP-A1- 3 101 411          EP-A2- 2 610 369**
**WO-A1-2015/200899     CN-U- 207 632 894**
**US-A1- 2005 006 250**

**Description**

The present invention relates to an interactive reference electrode for cathodic protection measurements.

As it is known, metal materials are subject to corrosion. Such a drawback especially affects iron, which is the most largely used construction material. Several methods are available to make metal materials immune to corrosion, and cathodic protection is one of them. Cathodic protection is an electrochemical process that is used to bring a metal material to immunity state.

All electrochemical process have at least one anode and at least one cathode and a circulating electrical current. In the cathodic protection process, the cathode is not affected by physical alterations, whereas the anode is consumed. By means of a circulation of a continuous electric current (by galvanic coupling or with a power supply source), cathodic protection converts the structure to be protected against corrosion into a cathode.

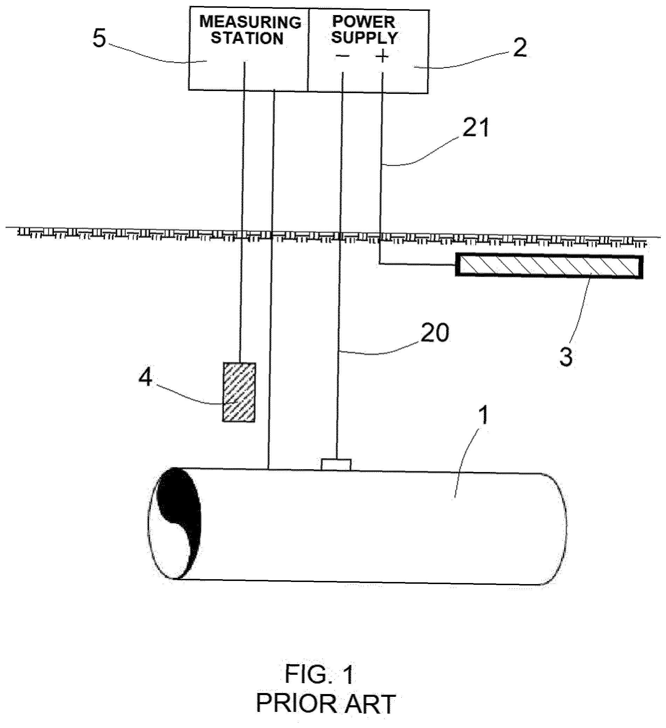

Fig. 1 is a diagrammatic view of a cathodic protection system with impressed current (with power supply).

A structure (1) to be protected, such as a pipe or a metal conduit, is connected to a negative pole of an electrical power supply (2) of continuous current type by means of an electrical cable (20). A ground electrode (3) is connected to a positive pole of the power supply (2) by means of an electrical cable (21). In view of the above, the structure (1) acts as cathode and the ground electrode (3) acts as anode and sacrificial element.

Cathodic protection is disciplined by regulations all over the world, especially in case of structures used for the transportation or the storage of materials that can generate critical situations (contamination, risk of explosion, and the like) if they are released in the environment.

The electrochemical potential must be measured based on a reference electrode (4) in order to understand when the metal material of the structure (1) is in immunity state, namely if the cathodic protection is effective. The reference electrode (4) is connected to a measuring station (5) where the potential difference between the structure (1) and the reference electrode (4) is measured with a millivoltmeter. If the potential different falls within a predefined safety range, the structure (1) is protected; otherwise, an alarm is generated because the structure (1) is not suitably protected.

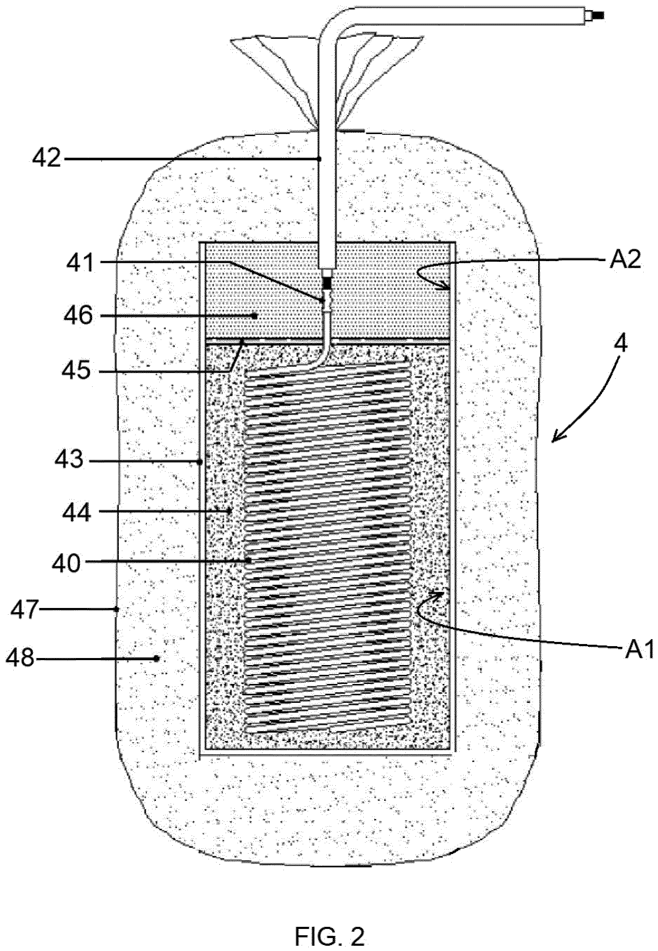

Fig. 2 illustrates an example of a reference electrode (4) according to the prior art. The reference electrode (4) comprises a conductor (40), such as for example a copper spiral. The conductor (40) is connected by means of a connector (41) to an electrical cable (42) suitable for being connected to the measuring station (5).

The conductor (40) is disposed in a container (43) made of porous material.

A partition (45) is provided in the container (43) in such a way to divide the container into a first chamber (A1), which contains the conductor (40), and a second chamber (A2), which contains with the connector (41) filled with epoxy resin (46) to seal and protect the input of the electrical cable (42) to the electrode.

In order to make the conductor unpolarizable (and consequently stable for the electrical measurement), the first chamber (A1) is filled with an electrolyte (44) in such a way to surround the conductor (40). Otherwise said, the conductor (40) is immersed in the electrolyte (44). The electrolyte (44) can be a salt, namely copper sulphate crystals ($CuSO_4$) if the conductor (40) is made of copper.

In case of use in very dry areas, the container (43) is disposed in a sack or case (47), for example made of cotton, filled with backfill (48), such as gypsum in 70% weight percentage, bentonite in 25% weight percentage and sodium sulphate ($NaSO_4$) in 5% weight percentage.

Obviously, the reference electrode (4) must be electrochemically stable in order to obtain reliable voltage and current measurements.

The reference electrodes that are currently available on the market provide a reference based on electrochemical principles in order to make voltage measurements of the potential of metal structures. Such voltage measurements of the potential of the structure must be compared, even if they are performed in different places and in different chemical-physical environmental conditions.

Although the shape and the type of reference electrode vary according to the place where the measurement is to be performed (soil, salt water, fresh water, etc.), the operating principle is identical, and therefore it is not considered as a variant of the present claim.

In spite of the attempt to have a reference electrode with a fixed potential value, the reference electrodes of the prior art have a potential value with a margin of instability due to external variables, such as temperature, humidity and other environmental parameters. Moreover, the reference electrode must be in optimal internal operating conditions.

Furthermore, it must be noted that the potential value of the reference electrode can vary over time because of a drift of the elements of the reference electrode. Therefore, the voltage measurements made by the electrode should be corrected from time to time based on a deviation detected with respect to a calibrated reference electrode. All critical defects of the reference electrode should be promptly recognized in order to determine the validity of the measurement.

Such a reference electrode of the prior art is a passive element that is unable to provide other information in addition to the measurement, therefore the operator is not able to verify a possible deviation of a reference electrode compared to a sample electrode. In order to assess a possible deviation of the reference electrode with respect to a sample electrode, an operator should read the measurements made on the electrode and compared them with the measurements of a sample electrode.

For illustrative purposes, the cathodic protection of a carbon steel structure is effective when, using a reference electrode of $Cu/CuSO_4$ (copper/copper sulphate), the potential difference between the structure and the reference electrode is comprised in a safety range from -0.85 V to -1.2 V. However, such a safety range is correct only if the temperature of the reference electrode is 25°C.

In fact, temperature has a thermal drift effect on the potential value of the reference electrode that can be expressed with the following formula:

$$E = Et - kt\ (T-25°C) \qquad (1)$$

Wherein:

kt = temperature coefficient
Et = potential measured at temperature T
E = real potential

In such a case, the thermal drift is given by the formula

$$Dt = kt\ (T-25°C) \qquad (2)$$

Such a thermal drift must be used to correct the measured potential value.

The reference electrodes of $Cu/CuSO_4$ have a temperature coefficient kt = 0,9 mV/°C. Therefore, in winter, at +5 °C, if a potential of -0.86 V is measured, the metal structure is apparently in the protection range, whereas if the thermal drift formula is applied, the result is as follows:

$$E = -0.86\ V - 0.0009\ V/°C\ (5\ °C - 25\ °C) = -0.842\ V$$

Otherwise said, the potential value is out of the protection range.

In view of the above, the temperature of the reference electrode can erroneously indicate that the structure to be protected is safe, whereas the real electrochemical potential value is out of the protection range. The electrodes of the prior art do not consider such a temperature variation.

It must be considered that the reference electrodes operate because they contain a certain amount of humidity. However, humidity is not controlled in the electrodes of the prior art.

Moreover, the type of electrode/electrolyte can cause errors if it is not known in advance. In fact, the type of electrode/electrolyte is only indicated in the technical literature available to the operator.

US2005006250 discloses a measuring system that comprises two reference electrodes (36, 48) of the prior art. The objective technical problem is to design a sliding system of the measuring system in order to make a measurement along a pipe section. Such a measuring system can be installed only when the pipe is laid, cannot be installed in any place and requires considerable excavation works with protection fences. The measuring system comprises two separate reference electrodes (36, 48) and one temperature electrode (14) that is different and separate from the reference electrodes (36, 48). The temperature sensor (14) is embedded in the electrolytic environment in a housing along with the two reference electrodes (36, 48), and is a separate element from the reference electrodes. Said measuring system does not provide for conductivity and humidity sensors. Conventionally, the measuring system can be connected to a processing unit that is disposed outside the ground where the reference electrodes are positioned. The reference electrodes (36, 48) generate potential systems that are corrected based on the temperature sensor by a programmable logic circuit prior to passing the signal on to the measuring system.

The purpose of the present invention is to eliminate the drawbacks of the prior art, by disclosing a reference electrode for cathodic protection measurements that is stable, precise, reliable, inexpensive and easy to make and install.

Another purpose is to disclose such a reference electrode that can be permanently installed in the ground and is able to output a calibrated potential signal, without the need of post-processing.

Another purpose is to disclose such a reference electrode that can provide diagnostic information on the electrode, without having to extract the electrode from the ground.

Another purpose is to disclose such a reference electrode that can provide the operator with useful information, such as: type of electrolyte ($Cu/CuSO_4$, Ag/AgCl, Zn, etc.), year of installation and other useful information.

These purposes are achieved according to the invention with the characteristics of the independent claim 1.

Advantageous embodiments of the invention appear from the dependent claims.

The reference electrode for cathodic protection measurements according to the invention is defined by claim 1.

Additional features of the invention will be manifest from the following detailed description that refers to a merely illustrative, not limiting embodiment, as shown in the appended figures, wherein:

Fig. 1 is a diagrammatic view of a cathodic protection system according to the prior art;
Fig. 2 is a sectional view of an example of reference electrode according to the prior art;
Fig. 3 is an axial sectional view of an example of reference electrode according to the invention;
Fig. 4 is a block diagram of the reference electrode according to the invention;
Fig. 5 is a diagrammatic view of a cathodic protection system according to the invention;
Fig. 6 is the same view as Fig. 3, which shows a variant of the reference electrode, with the addition of a selector.

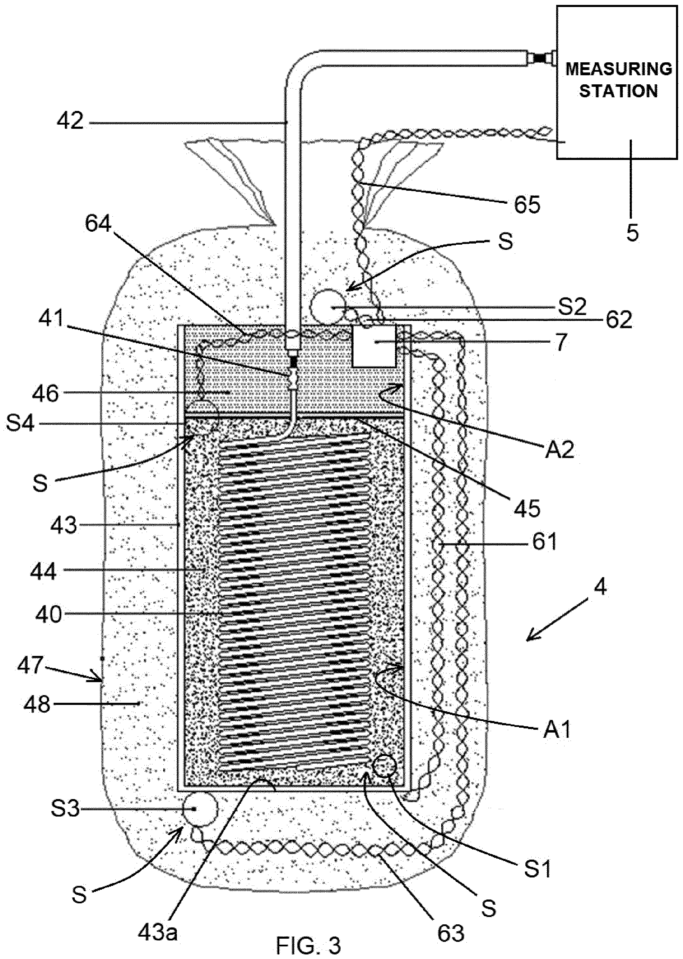

With reference to Fig. 3, a reference electrode (4) according to the invention is described. In the following description, elements that are identical or correspond to the ones described above will be indicated with the same numerals, omitting a detailed description.

The reference electrode (4) comprises a plurality of sensors (S) embedded in the reference electrode. Said plurality of sensors (S) comprises at least one temperature sensor (S1, S2) to measure the temperature of the reference electrode.

Preferably, the reference electrode (4) comprises:

- a first temperature sensor (S1) disposed in such a way to measure a temperature (T1) of the electrolyte (44), and
- a second temperature sensor (S2) disposed in such a way to measure a temperature (T2) of the reference electrode outside the container (43) of the electrode.

The first temperature sensor (S1) is disposed in the electrolyte (44) in contact with the container (43) that contains the electrolyte (44), for example in contact with a bottom wall (43a) of the container that contains the electrolyte.

The second temperature sensor (S2) is disposed in the backfill (48) or, if the backfill (48) is not present, outside the container that contains the electrolyte, for example above the resin (46) disposed above the upper portion (45) of the container (43) that contains the electrolyte.

Moreover, the plurality of sensors (S) comprises at least one diagnostic sensor (S2, S3) to measure a status value of the reference electrode to be compared with threshold values in order to monitor the correct operation of the electrode.

The diagnostic sensors comprise a conductivity sensor (S3) able to detect an electrical conductivity ($\sigma$) of the reference electrode (4).

The conductivity sensor (S3) is disposed in the backfill (48) in contact with the container (43) that contains the electrolyte (44), for example in contact with the bottom wall (43a) of the container that contains the electrolyte (44) or in any case, when the backfill is not present, outside the container (43) that contains the electrolyte (44).

The diagnostic sensors also comprise a humidity sensor (S4) able to detect a humidity (H) contained in the electrolyte (44) of the reference electrode (4).

The humidity sensor (S4) is disposed in the electrolyte (44).

The first temperature sensor (S1), the second temperature sensor (S2), the conductivity sensor (S3) and the humidity sensor (S4) are connected to a control unit (7) embedded in the reference electrode (4) by means of electrical cables (61, 62, 63, 64).

The control unit (7) is disposed in the reference electrode (4), for example in the resin (46). In such a case, the control unit (7) is connected to a measuring station (5) disposed outside the reference electrode (4) by means of an electrical cable (65) or in wireless mode.

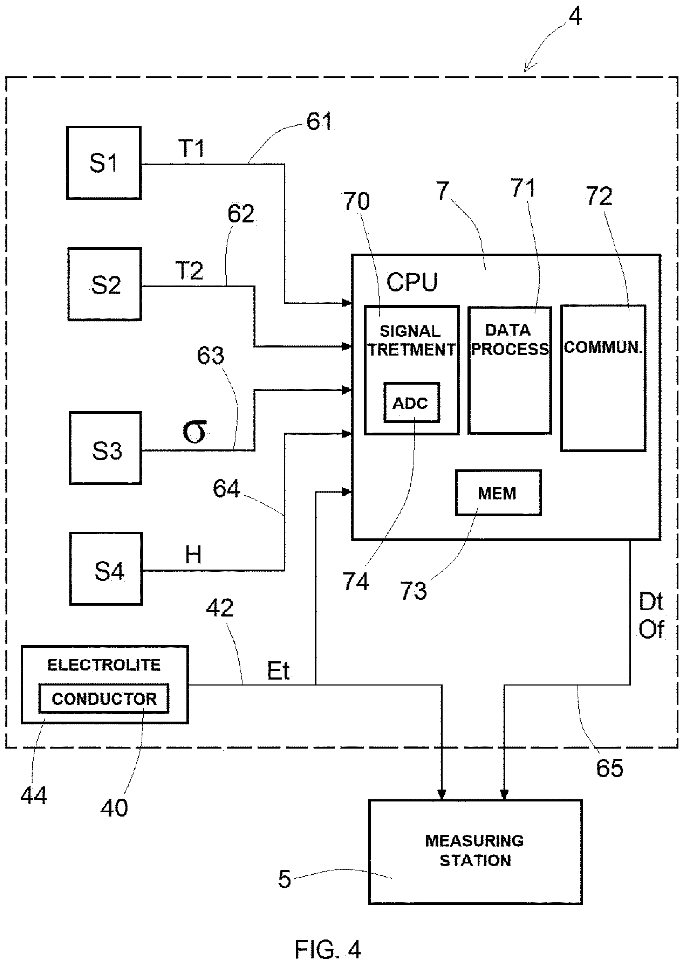

With reference to Fig. 4, the control unit (7) comprises:

- a signal treatment section (70) that receives the electric signals from the sensors (S1, S2, S3, S4) and from the conductor (40) of the electrode and converts them into signals suitable for being processed,
- a processing section (71) to process the received signals, and
- a communication section (72) to transmit the processed signals to the measuring station (5) in wired more with the electrical cable (65) or in wireless mode.

The control unit (7) receives the potential value (Et) of the reference electrode (4) and the temperature values (T1, T2) detected by the temperature sensors (S1, S2).

In case of multiple temperature sensors, the control unit calculates a mean of the temperature values measured by the temperature sensors.

$$T = (T1 + T2)/2$$

The temperature (T) is used to calculate a thermal drift value (Dt) with the formula (2), namely

$$Dt = kt\ (T-25\ °C).$$

Evidently, the control unit (7) has a memory (73) where the temperature coefficient (kt) of the electrolyte is stored.

Such a thermal drift value (Dt) is used to correct the potential value (Et) measured by the reference electrode (4) with the formula (1) E = Et - kt (T-25°C).

The control unit (7) receives the electrical conductivity values ($\sigma$) measured by the conductivity sensor (S3). The electrical conductivity values ($\sigma$) are used to monitor the quality of the contact between the reference electrode (4) and the environment where the electrode operates.

A conductivity threshold value ($\sigma_T$) is stored in the memory (73), for example 0.01 Siemens, below which the operation of the electrode is not guaranteed.

If the electrical conductivity value ($\sigma$) detected by the electrical conductivity sensor (S3) drops below the threshold value ($\sigma_T$), the potential measurement made by the electrode is no longer reliable and an alarm is generated.

The control unit (7) receives the humidity values (H) measured by the humidity sensor (S4). The humidity values (H) are used to verify the condition of the electrode. A relative humidity percentage is measured.

The reference electrode (4) operates because the electrolyte (44) contains a certain amount of humidity.

The electrode manufacturer provides an optimal humidity range (HT) according to the type of electrolyte used (liquid, gel, copper sulphate ($CuSO_4$), silver chloride (AgCI)). Therefore, the type of electrolyte (44) and the optimal humidity range ($H_T$) are stored in the memory (73).

If the humidity value (H) detected by the humidity sensor (S4) is out of the optimal range ($H_T$), the electrode is deteriorated, the potential measurement made by the electrode is no longer reliable and therefore an alarm is generated.

The signal treatment section (70) of the control unit comprises an A/D converter (74) that receives the analogue signals from the cables (61, 62, 63, 64) of the sensors (S1, S2, S3, S4) and converts them into digital values that will be processed by the data processing section (71).

The data processing section (71) manages the following functions: calibration, self-offset, self-diagnosis and storage.

Calibration consists in storing in the memory (73) a calibration offset value (Of) between a potential measurement (E) made with the reference electrode (4) and a potential measurement (E*) made with a calibrated electrode. The calibration offset value (Of) is given by the difference of the two measurements, namely by the following formula

$$Of = E - E^* \qquad\qquad (3)$$

This operation is performed by a technician provided with a reference electrode that has been calibrated in the laboratory. The technician measures the potential (E) of the reference electrode and the potential (E*) of the calibrated electrode. The control unit (7) calculates a difference between the two measurements in such a way to obtain the calibration offset value (Of) that is stored in the memory (73). Such a calibration offset value (Of) is applied to each measurement made by the reference electrode (4).

The self-offset is made using the temperature value (T) obtained from the temperature sensors (S1, S2). The control unit (7) calculates the thermal drift (Dt) that is used to correct the potential value detected by the reference electrode (4).

The calibration offset value (Of), the electrical conductivity threshold value ($\sigma_T$), the optimal humidity range ($H_T$), the temperature, conductivity and humidity measurements made by the sensors (S1, S2, S3, S4) and the potential measurements made by the electrode (4) are stored in the memory to create a set of historical data.

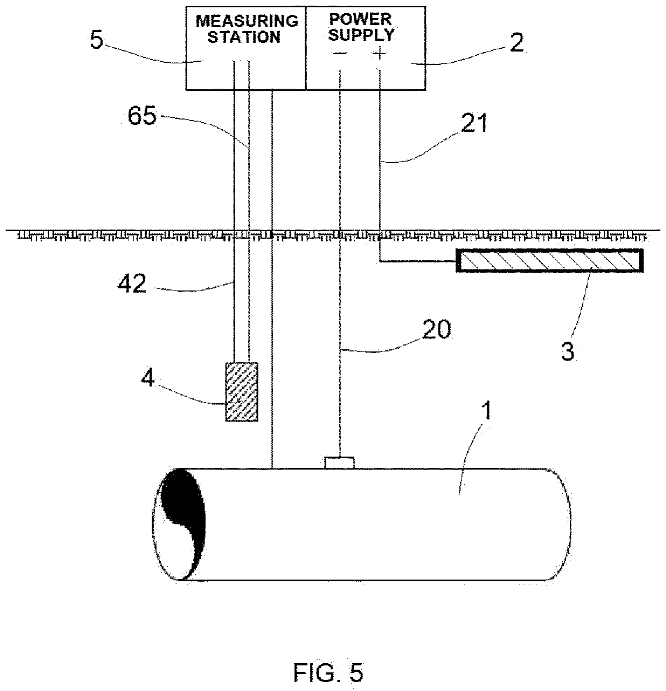

Fig. 5 illustrates the reference electrode (4) according to the invention applied to a cathodic protection system in order to protect a pipe (1). In such a case, the reference electrode (4) is connected to the measuring station (5) by means of the electrical cable (42) connected to the conductor (40) of the electrode and by means of the electrical cable (65) connected to the control unit (7) disposed in the electrode. However, the control unit (7) can transmit the data to the measuring station (5) in wireless mode, and in such a case no electrical cable (65) is provided. Moreover, the control unit (7) can be disposed outside the case (47) of the electrode and can be connected to sensors (S1, S2, S3, S4) in wired mode or wireless mode.

The memory (73) disposed inside the reference electrode (4) stores the calibration offset value (Of), the measurements (T1, T2, $\sigma$, H) of the sensors, the threshold diagnostic range (($\sigma_T$, $H_T$) and, most of all, the technical construction and installation data of the reference electrode for future consultation for the operator who uses said reference electrode.

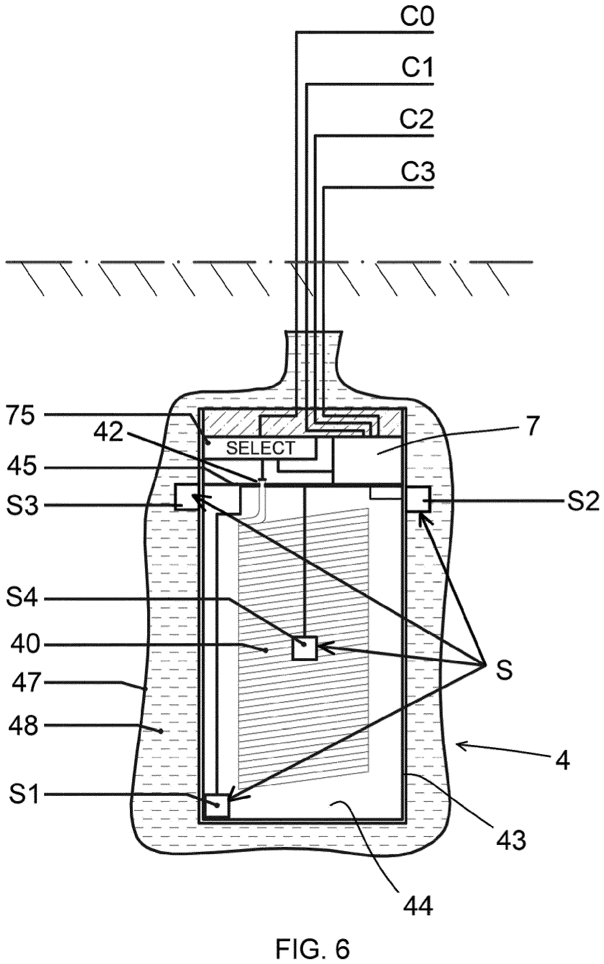

With reference to Fig. 6, the reference electrode (6) also comprises a selector (75) consisting of a bistable relay that is electrically connected to the electrical cable (42) of the conductor (40) and to the control unit (7) to receive the potential (Et) measured by the conductor of the electrode and a reference Δ to calibrate the electrode. The reference Δ comprises the calibration offset value (Of) stored in the memory and the potential correction based on the thermal drift (Dt) calculated by means of the temperature sensors (S1, S2) and of the control unit (7).

When the control unit (7) is not powered, the selector (75) simply permits the passage of the potential signal (Et) coming from the conductor (40) of the electrode, just like a traditional electrode.

When the control unit (7) is powered, the selector (75) sends a signal equal to the potential (Et) coming from the electrode +. The reference Δ is the algebraic sum of the calibration offset value (Of) and the temperature correction result.

Example:

- the potential measured by the conductor (40) is identified with the value "0".
- the calibration offset value stored in the internal memory following to the last calibration activity is +0.123V
- the temperature correction calculated based on the thermal drift (Dt) from the temperature values detected by the sensors (S1, S2) is +0.071 V:
  therefore the reference Δ will be 0.123V + 0.071 V = +0.194V

The signal sent to the surface by the selector (75) to make the measurement will no longer be the original "0" given by the conductor, like in a standard electrode, but will be a "0" shifted by 0.194V. In this way, the technician on the site will obtain a correct measurement directly, without the use of post-processing or instruments other than the ones that are normally used to make cathodic protection potential measures. Moreover, all measurement errors will be eliminated because of the electrode calibration and the temperature offset.

A potential cable C0 comes out of the selector (75) and brings the potential value of the reference electrode suitably corrected by means of the control unit (7).

The following cables come out of the control unit (7):

- an alarm digital cable (C1) that brings an alarm signal in case of malfunctioning of the electrode calculated by the control unit (7) by means of the diagnostic sensors (S3, S4), as previously described;
- a communication bus (C2) for calibrating the electrode and reading the values stored in the memory (73), such as the values detected by the sensors (S), the technical identification data of the electrode, and the diagnostic values obtained from the conductivity and humidity sensors; and
- a power cable (C3) to power the control unit (7).


**Claims**

1. Reference electrode (4) for cathodic protection measurements, comprising:

   - a conductor (40) disposed in an electrolyte (44) contained in a container (43), and
   - an electric cable (42) connected to the conductor (40) and suitable for being connected to a measuring station (5) in order to measure a potential (Et) of a structure to be protected,

   **characterized in that** it comprises

   - a control unit (7) embedded in the reference electrode, and
   - a plurality of sensors (S) embedded in the reference electrode and electrically connected to said control unit (7);

   wherein said plurality of sensors (S) comprises:

   - at least one temperature sensor (S1, S2) to measure at least one temperature (T1, T2) of the reference electrode, and
   - at least one diagnostic sensor (S3, S4) to detect a status value of the reference electrode;

     wherein said control unit (7) comprises a memory (73) to store a calibration offset value (Of), measurements performed by the sensors (S), threshold ranges T, HT) for diagnostics and technical data of the reference electrode; and

said control unit (7) is configured in such a way:

- to process said temperature (T1, T2) measured by said at least one temperature sensor, in order to calculate a thermal drift value (Dt) and to correct said potential (Et) measured by the reference electrode with said thermal drift value (Dt) and with said calibration offset value (Of) stored in the memory (73), and
- to compare the status value detected by said at least one diagnostic sensor with said threshold range stored in the memory and to generate an alarm signal when the status value is out of the threshold range.

2. The reference electrode (4) of claim 1 comprising a case (47) filled with a backfill (48) that surrounds the container (43) of the electrolyte.

3. The reference electrode (4) of claim 1 or 2, comprising:

- a first temperature sensor (S1) disposed in such a way to measure a temperature (T1) of the electrolyte (44), and
- a second temperature sensor (S2) disposed in such a way to measure a temperature (T2) of the reference electrode (4) outside the electrolyte (44).

4. The reference electrode (4) of claim 3, when depending on claim 2, wherein the first temperature sensor (S1) is disposed in the backfill (48) in contact with the container (43) that contains the electrolyte (44), and the second temperature sensor (S2) is disposed in the backfill (48) in distal position from the electrolyte (44).

5. The reference electrode (4) of any one of the preceding claims, wherein said at least one diagnostic sensor comprises a conductivity sensor (S3) suitable for measuring an electric conductivity ($\sigma$) of the reference electrode (4); said conductivity sensor (S3) being operatively connected to said control unit (7) and said control unit (7) being configured in such a way to compare the conductivity value measured by the conductivity sensor with a threshold value ($\sigma_T$) and generate an alarm when the conductivity value is lower than the threshold value.

6. The reference electrode (4) of claim 5, wherein said conductivity sensor (S3) is disposed in the backfill (48) in contact with the container (43) that contains the electrolyte (44).

7. The reference electrode (4) of any one of the preceding claims, wherein said at least one diagnostic sensor comprises a humidity sensor (S4) suitable for measuring a humidity (H) of the reference electrode (4); said humidity sensor (S4) being operatively connected to said control unit (7) and said control unit (7) being configured in such a way to compare the humidity value measured by the humidity sensor with the optimal range (HT) and generate an alarm when the humidity value is out of the optimal range.

8. The reference electrode (4) of claim 7, wherein said humidity sensor (S4) is disposed in the electrolyte (44).

9. The reference electrode (4) of any one of the preceding claims, wherein said control unit (7) comprises:

- a signal treatment section (70) that receives the electric signals from the sensors (S1, S2, S3, S4) and from the conductor (40) of the electrode and converts them into signals suitable for being processed,
- a processing section (71) to process the received signals, and
- a communication section (72) to transmit the processed signals to the measuring station (5).

10. The reference electrode (4) of any one of the preceding claims, also comprising a selector (75) embedded in the reference electrode and electrically connected to the electrical cable (42) of the conductor (40) and to the control unit (7) to receive the potential (Et) measured by the electrode and a reference $\Delta$ to calibrate the electrode that comprises the calibration offset value (Of) stored in the memory and the potential correction based on the thermal drift (Dt) calculated by the control unit.

**Patentansprüche**

1. Referenzelektrode (4) für Kathodenschutzmessungen, umfassend:

- einen Leiter (40), der in einem Elektrolyten (44) angeordnet ist, der in einem Behälter (43) enthalten ist, und
- ein Elektrokabel (42), das mit dem Leiter (40) verbunden ist und geeignet ist, an eine Messstation (5) angeschlossen zu werden, um ein Potenzial (Et) einer zu schützenden Struktur zu messen,

**dadurch gekennzeichnet, dass** sie Folgendes umfasst:

- eine Steuereinheit (7), die in der Referenzelektrode eingebaut ist, und
- eine Mehrzahl von Sensoren (S), die in der Referenzelektrode eingebaut sind und elektrisch an die Steuereinheit (7) angeschlossen sind,

wobei die Mehrzahl der Sensoren (S) Folgendes umfasst:

- mindestens einen Temperatursensor (S1, S2), um mindestens eine Temperatur (T1, T2) der Referenzelektrode zu erfassen, und
- mindestens einen Diagnosesensor (S3, S4), um mindestens einen Statuswert der Referenzelektrode zu erfassen;

wobei die Steuereinheit (7) einen Speicher (73) umfasst, in dem ein Kalibrierungsversatzwert (Of), von den Sensoren (S) vorgenommene Messungen, Schwellenbereich (T, HT) für die Diagnose und technische Daten der Referenzelektrode gespeichert sind; und
die Steuereinheit (7) so konfiguriert ist, dass sie

- die von dem mindestens einen Temperatursensor erfasste Temperatur (T1, T2) verarbeitet, so dass ein Driftwert (Dt) berechnet wird und das von der Referenzelektrode gemessene Potenzial (Et) mit dem Driftwert (Dt) und dem in dem Speicher (73) gespeicherten Kalibrierungsversatzwert (Of) korrigiert wird, und
- den von dem mindestens einen Diagnosesensor erfassten Statuswert mit dem im Speicher gespeicherten Schwellenbereich vergleicht und einen Alarm ausgibt, wenn der Statuswert außerhalb des Schwellenbereichs liegt.

2. Referenzelektrode (4) nach Anspruch 1, umfassend ein Gehäuse (47), das mit Füllmaterial (48) gefüllt ist, das den Behälter (43) des Elektrolyten umgibt.

3. Referenzelektrode (4) nach Anspruch 1 oder 2, umfassend:

- einen ersten Temperatursensor (S1), der so angeordnet ist, dass er eine Temperatur (T1) des Elektrolyten (44) erfasst, und
- einen zweiten Temperatursensor (S2), der so angeordnet ist, dass er eine Temperatur (T2) der Referenzelektrode (4) außerhalb des Elektrolyten (44) erfasst.

4. Referenzelektrode (4) nach Anspruch 3, wenn abhängig von Anspruch 2, wobei der erste Temperatursensor (S1) in dem Füllmaterial (48) im Kontakt mit dem Behälter (43), der den Elektrolyten (44) enthält, angeordnet ist, und der zweite Temperatursensor (S2) in dem Füllmaterial (48) fern von dem Elektrolyten (44) angeordnet ist.

5. Referenzelektrode (4) nach einem der vorstehenden Ansprüche, wobei der mindestens eine Diagnosesensor einen Leitfähigkeitssensor (S3) umfasst, der geeignet ist, eine elektrische Leitfähigkeit ($\sigma$) der Referenzelektrode (4) zu erfassen; wobei der Leitfähigkeitssensor (S3) mit der Steuereinheit (7) wirkverbunden ist und wobei die Steuereinheit (7) so konfiguriert ist, dass sie den von dem Leitfähigkeitssensor erfassten Leitfähigkeitswert mit einem Schwellenwert ($\sigma_T$) vergleicht und einen Alarm ausgibt, wenn der erfasste Leitfähigkeitswert kleiner als der Schwellenwert ist.

6. Referenzelektrode (4) nach Anspruch 5, wobei der Leitfähigkeitssensor (S3) in dem Füllmaterial (48) im Kontakt mit dem Behälter (43), der den Elektrolyten (44) enthält, angeordnet ist.

7. Referenzelektrode (4) nach einem der vorstehenden Ansprüche, wobei der mindestens eine Diagnosesensor einen Feuchtigkeitssensor (S4) umfasst, der geeignet ist, eine Feuchtigkeit (H) der Referenzelektrode (4) zu erfassen; wobei der Feuchtigkeitssensor (S4) mit der Steuereinheit (7) wirkverbunden ist und wobei die Steuereinheit (7) so konfiguriert ist, dass sie den von dem Feuchtigkeitssensor erfassten Feuchtigkeitswert mit dem optimalen Bereich ($H_T$) vergleicht und einen Alarm ausgibt, wenn der erfasste Feuchtigkeitswert außerhalb des optimalen Bereichs liegt.

8. Referenzelektrode (4) nach Anspruch 7, wobei der Feuchtigkeitssensor (S4) in dem Elektrolyten (44) angeordnet ist.

9. Referenzelektrode (4) nach einem der vorstehenden Ansprüche, wobei die Steuereinheit (7) Folgendes umfasst:

   - einen Signalbearbeitungsabschnitt (70), der die elektrischen Signale von den Sensoren (S1, S2, S3, S4) und von dem Leiter (40) der Elektrode empfängt und in Signale verwandelt, die geeignet sind, verarbeitet zu werden,
   - einen Verarbeitungsabschnitt (71), der die empfangenen Signale verarbeitet, und
   - einen Kommunikationsabschnitt (72), der die verarbeiteten Signale an die Messstation (5) überträgt.

10. Referenzelektrode (4) nach einem der vorstehenden Ansprüche, ferner umfassend einen Selektor (75), der in der Referenzelektrode eingebaut ist und elektrisch an das Elektrokabel (42) des Leiters (40) und an die Steuereinheit (7) angeschlossen ist, um das von der Elektrode gemessene Potenzial (Et) und ein Referenz ∆ zu empfangen, um die Elektrode zu kalibrieren, die den im Speicher gespeicherten Kalibrierungsversatzwert (Of) und die Potenzialkorrektur basierend auf dem von der Steuereinheit berechneten Driftwert (Dt) umfasst.

**Revendications**

1. Electrode de référence (4) pour mesures de protection cathodique, comprenant :

   - un conducteur (40) disposé dans un électrolyte (44) contenu dans un récipient (43), et
   - un câble électrique (42) connecté au conducteur (40) et destiné à être branché à un poste de mesurage (5), pour mesurer un potentiel (Et) d'une structure à protéger,

   **caractérisée en ce qu'**elle comprend

   - une unité de commande électronique (7) intégrée dans l'électrode de référence, et
   - une pluralité de capteurs (S) intégrés dans l'électrode de référence et branchés électriquement à ladite unité de commande électronique (7) ;

   où ladite pluralité de capteurs (S) comprend :

   - au moins un capteur de température (S1, S2) pour mesurer au moins une température (T1, T2) de l'électrode de référence, et
   - au moins un capteur de diagnostic (S3, S4) pour relever une valeur d'état de l'électrode de référence ;
   où ladite unité de commande électronique (7) comprend une mémoire (73) dans laquelle sont mémorisées une valeur de décalage d'étalonnage (Of), les mesures effectuées par les capteurs (S), les plages de seuil (T, HT) pour le diagnostic et les données techniques de l'électrode de référence ; et
   ladite unité de commande électronique (7) est configurée de manière à:

      - élaborer ladite température (T1, T2) relevée par ledit au moins un capteur de température, de manière à calculer une valeur de dérive thermique (Dt) et corriger ledit potentiel (Et) mesuré par l'électrode de référence avec ladite valeur de dérive thermique (Dt) et avec ladite valeur de décalage d'étalonnage (Of) mémorisée dans la mémoire (73), et
      - comparer la valeur d'état relevée par ledit au moins un capteur de diagnostic avec ladite plage de seuil mémorisée dans la mémoire et émettre une alarme lorsque la valeur d'état est hors de la plage de seuil.

2. Electrode de référence (4) selon la revendication 1 comprenant un boitier (47) rempli de matériel de remplissage (48) qui enveloppe le récipient (43) de l'électrolyte.

3. Electrode de référence (4) selon la revendication 1 ou 2, comprenant :

   - un premier capteur de température (S1) disposé de manière à relever une température (T1) de l'électrolyte (44), et
   - un second capteur de température (S2) disposé de manière à relever une température (T2) de l'électrode de référence (4) à l'externe de l'électrolyte (44).

4. Electrode de référence (4) selon la revendication 3 quand dépendante de la revendication 2, où le premier capteur de température (S1) est disposé dans le matériel de remplissage (48) en contact avec le récipient (43) qui contient l'électrolyte (44) et le second capteur de température (S2) est disposé dans le matériel de remplissage (48) distant de l'électrolyte (44).

**5.** Electrode de référence (4) selon l'une quelconque des revendications précédentes, où ledit au moins un capteur de diagnostic comprend un capteur de conductibilité (S3) apte à relever une conductibilité électrique ($\sigma$) de l'électrode de référence (4) ; ledit capteur de conductibilité (S3) étant opérationnellement connecté à ladite unité de commande électronique (7) qui est configurée de manière à comparer la valeur de conductibilité relevée par le capteur de conductibilité avec une valeur de seuil ($\sigma_T$) et émettre une alarme lorsque la valeur de conductibilité relevée est inférieure à la valeur de seuil.

**6.** Electrode de référence (4) selon la revendication 5, où ledit capteur de conductibilité (S3) est disposé dans le matériel de remplissage (48) en contact avec le récipient (43) qui contient l'électrolyte (44).

**7.** Electrode de référence (4) selon l'une quelconque des revendications précédentes, où ledit au moins un capteur de diagnostic comprend un capteur d'humidité (S4) apte à relever une humidité (H) de l'électrode de référence (4) ; ledit capteur d'humidité (S4) étant opérationnellement connecté à ladite unité de commande électronique (7) et ladite unité de commande électronique (7) étant configurée de manière à comparer la valeur d'humidité relevée par le capteur d'humidité avec la plage optimale ($H_T$) et émettre une alarme lorsque la valeur d'humidité relevée se trouve hors limites de la plage optimale.

**8.** Electrode de référence (4) selon la revendication 7, où ledit capteur d'humidité (S4) est disposé dans l'électrolyte (44).

**9.** Electrode de référence (4) selon l'une quelconque des revendications précédentes, où ladite unité de commande électronique (7) comprend :

- une section de traitement de signal (70) qui reçoit les signaux électriques en provenance des capteurs (S1, S2, S3, S4) et du conducteur (40) de l'électrode et les convertit en signaux aptes à être élaborés,
- une section d'élaboration (71) qui traite les signaux reçus, et
- une section de communication (72) qui transmet les signaux traités au poste de mesurage (5).

**10.** Electrode de référence (4) selon l'une quelconque des revendications précédentes, comprenant également un sélecteur (75) intégré dans l'électrode de référence et branché électriquement au câble électrique (42) du conducteur (40) et à l'unité de commande électronique (7) pour recevoir le potentiel (Et) mesuré par l'électrode et un $\Delta$ de référence pour étalonner l'électrode qui comprend le décalage d'étalonnage (Of) enregistré dans la mémoire et la correction de potentiel sur la base de la dérive thermique (Dt) calculée par l'unité de commande électronique.

FIG. 1
PRIOR ART

FIG. 2

MEASURING STATION

FIG. 3

FIG. 4

EP 3 848 697 B1

FIG. 5

15

FIG. 6

**EP 3 848 697 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005006250 A